Europäisches Patentamt

**European Patent Office**

**Office européen des brevets**

(19)

(11) Publication number: **0 135 966**
A2

(12) # EUROPEAN PATENT APPLICATION

(21) Application number: **84201308.8**

(22) Date of filing: **12.09.84**

(51) Int. Cl.⁴: **C 10 G 1/04, C 02 F 11/06**

(30) Priority: **13.09.83 CA 436733**

(43) Date of publication of application: **03.04.85**
**Bulletin 85/14**

(84) Designated Contracting States: **BE DE FR GB IT NL SE**

(71) Applicant: **Buijs, Jan Bernard, 's-Gravendijkwal 48, NL-3014 ED Rotterdam (NL)**

(72) Inventor: **Buijs, Jan Bernard, 's-Gravendijkwal 48, NL-3014 ED Rotterdam (NL)**
Inventor: **de Calonne, Robert Dave, 3208 Conrad Drive N.W., Calgary Alberta, T2L 1B4 (CA)**

(54) **Method of utilization and disposal of sludge from tar sands hot water extraction process and other highly contaminated and/or toxic and/or bitumen and/or oil containing sludges.**

(57) A method of treating bitumen and/or oil containing sludges or tailings is disclosed which comprises the steps of mixing the sludge or tailings with a secondary carbonaceous fuel, reducing the toxic substances and the moisture content of the mixture and introducing the mixture into a combustor or gasifier for combustion or gasification. The method may be used to process the middlings and froth treatment tailings from the tar sands hot water extraction process. The method may also be used to treat the sludges reclaimed from tar sands tailings ponds, or from harbour maintenance dredging operations, or the slurries produced as 'produced water' in in situ heavy oil production or other similar sludges.

The method is particularly suitable for use in combination with a flooded mine tar sands mining method.

METHOD OF UTILIZATION AND DISPOSAL OF SLUDGE
FROM TAR SANDS HOT WATER EXTRACTION PROCESS
AND OTHER HIGHLY CONTAMINATED AND/OR TOXIC
AND/OR BITUMEN AND/OR OIL CONTAINING SLUDGES

## Background of the Invention

### 1. Field of the Invention

This invention relates to an improved method for the processing of bitumen-containing sludges produced in the tar sands oil extraction process and other sources such as maintenance dredging of harbours and oil well drill cuttings. More particularly, it relates to a method of reducing the toxic substances and the moisture content of and combusting or gasifying the tailings from the middlings and froth treatment stages of the hot water extraction process in tar sands mining and other sludges.

### 2. Prior Art

Most currently operating tar sands oil extraction processes involve the use of the so-called Clark Hot Water Process to extract the bitumen from the mined tar sands. Tar or oil sands, suchs as those found in the Athabasca tar sands deposits in Alberta, Canada are primarily silica. Each grain of sand is surrounded by a thin film of water (about 10 nanometers thick). A deposit of heavy petroleum is held in the center of the 'pore' formed in the interstices between a number of such grains of sand. The tar sands also contain clay,, silt and water in variable quantities. The deposits are relatively shallow and are currently mined using conventional strip mining and open pit methods  The overlying earth and muskeg, or 'overburden', is stripped and the underlying tar sands are dug out by draglines. The mined tar sands are conveyed to an extraction plant for separation of the bitumen from the sand using the Clark Hot Water Process.

The Hot Water Process for extracting the bitumen from the tar sands involves introducing the tar sand into a rotating drum, called a tumbler or digester, with hot water and steam.

A surfactant such as caustic may also be added to assist in the separation process. The bitumen coating is thereby loosened from the sand particles and the resulting slurry is aerated. The slurry is screened to remove oversize particles (the 'rejects'). Additional hot water is added to the slurry raising the water content to about 50%. The slurry is pumped to a gravity separation vessel, called a desander or the primary separation vessel, which allows the sand to sink and the bitumen to float to the surface attached to air bubbles in a bituminous froth. The coarser sand particles are drawn off the bottom of the primary separation vessel as the primary tailings. The primary tailings still contain up to .5% bitumen by weight. A stream of the slurry called the 'middlings' is drawn off from the middle of the primary separation vessel and is subjected to flotation in a secondary step. In this secondary step, air is forced through the middlings mixture in a sub-aerated flotation chamber to form a secondary froth. The secondary froth is removed and added to the primary froth to be transferred for further processing. In a modified hot water extraction process, the Gulf RTR process, the middlings are transferred to a primary thickener/clarifier and solids are further separated in a primary centrifuge. In both processes, the rejects from the processing of the middling form a secondary tailings. In the Clark process as used in the Syncrude and Syncor plants in Fort McMurray, Alberta the middlings or secondary tailings and the primary tailings are pumped to a talings distributor and thence into the tailings line to the tailings ponds.

In the second stage of the hot water extraction process, naptha is generally added to the bitumen froth as a diluent. In the Clark Hot Water Process, the remaining water, clay and silt are separated from the bitumen using a two-stage centrifuge process to extract the bitumen from the froth. A scroll machine is first used to remove coarse solids and water. A disc centrifuge is then used to separate the fines (clay and silt) and any remaining water. The discharge cake from the scroll machine is approximately 85% solids and is diluted with recycling water from the disc centrifuge and is removed to the tailings ponds. The alternate Gulf RTR process uses a rotating drum called a contactor, an oil-water separator, a secondary thickener and a secondary centrifuge.

Extracted bitumen proceeds to an upgrading plant, while the rejects from this second stage form the froth tailings.

In the current tar sands hot water extraction process, primary, secondary and froth tailings are sluiced in a slurry pipeline to a tailings pond where solids are allowed to settle. Dikes to form the ponds are constructed from the solid tailings. The use of such tailings ponds carries with it several disadvantages, Such ponds are extensive in area, 30 square kilometers or more, and may cover otherwise useful tar sand deposits, thereby rendering large areas of such deposits at least temporarily inaccessible. Diverting the hot tailings to ponds results in heat loss and thus reduces the thermodynamic efficiency of the tar sands mining process. Because the fine solids settle very slowly in the tailings ponds, the water from such ponds may be recycled only after several years. The presence of clay and silt in the recycled water will reduce the primary froth yield. The pond accumulates sludge composed mostly of fine solids which will eventually settle to form a sludge zone composed of approximately 30% to 35% solids by weight. The presence of clay and silt in the recycled water, if such water is returned to the hot water extraction process, will reduce the primary froth yield. Most importantly, the tailings ponds have a substantial negative environmental impact. The tailings disposed in such pond of course retain a certain amount of bitumen which tends to float to the surface and causes a hazard to wild birds attracted to the open water. Devices for frightening the birds from the area are required. The danger of the bitumen-contaminated contents of the tailings ponds entering the surrounding natural groundwater drainage system and causing ecological damage always exists. Further, the reclamation of the huge ponds can only occur over very long periods of time, twenty years or more, and the problems of reclamation have not as yet been resolved. For example, $350 million has been earmarked for reclamation of the Syncrude tailings ponds.

Various suggestions have been made for the further processing of the tailings produced in the hot water extraction process to avoid the problem created by the tailings ponds.

For example, Clarke United States patent no. 4,240,897, issued 23 December, 1980 discloses an additional step in the process which utilizes a vacuum filter unit to recover the hot water and bitumen from the tailings for return to the extraction process, leaving almost-dry tailings which can be returned to the mined-out area. However, such vacuum filtration is expensive and problems are created in the use of such methods of filtration with bitumen-containing tailings.

With regard to harbour sludges, the current practise is to dispose sludges from harbour maintenance dredging in offshore or onshore disposal areas. The sludge is classified in 4 classes of contamination. The classes three and four are heavily contaminated with heavy metals, polychlorbifenyles (PCB's), polycyclic aromatics (PCA's) and hexachlorins benzoins (HCB's). Class four sludge may even contain from 5000 to 50000 ppm of oil. It is expected that the annual pruduction of class three and four sludges will increase and numbers of two million cubic metres per annum have been quoted. A quoted number for class four sludge is 10000-100000 m3 per annum.

These numbers present a gigantic and expensive disposal problem.

Summary of the Invention

The present invention overcomes the problems created by tailings ponds in the tar sands hot water extraction process and by the disposal of class three and class four harbour sludges by providing a method of reducing toxic and moisture content of and combusting the various tailings produced in such process (Which may be referred to generally as 'sludge') or the sludge reclaimed from the sludge zone of the tailings ponds, from harbour dredging or other sources such as oil well drill cuttings. The sludge is mixed with a secondary fuel, such as coal or coke and possibly other solids, and the moisture content of the mixture is then reduced to produce a mixture suitable for self-sustaining combustion in a combustor or gasifier. Before combustion the remaining high boiling fractions of the PCA's, the PCB's and the HCB's are removed by distillation and/or cracking of the mixture.

Heat is thereby generated to produce steam for use in the extraction process. The by-product of the combustion or gasification is a clean, hot ash which may be disposed   or used for roadconstruction or building materials. A further advantage is provided where a flooded-mine tar sands mining method is utilized, as the hot ash may be returned to the dredging pond causing the temperature of the pond to be raised above the freezing level for year-round operation of the mine. The method may also be utilized to dispose of sludge produced in the treatment of the produced water from in situ heavy oil production.

The present invention provides a method of utilizing and disposing of waste tailings from the tar sand hot water extraction process and sludges from other sources such as maintenance dredging of harbours and oil well drill cuttings, which includes the steps of mixing the middlings or secondary tailings from the hot water extraction process with a secondary fuel and reducing the toxic substances and the moisture content of such mixture to arrive at a mixture suitable for self-sustainin combustion in a combustor or gasifier, and combusting or gasifying such mixtures in a combustor or gasifier to provide heat for a boiler. The primary tailings, limestone or other solids may be added to the mixture prior to combustion. Sludge from the sludge zone of a tailings ponds, or sludge produced from the produced water from an in situ heavy oil production facility, and sludges from other sources such as maintenance dredging of harbours and oil well drill cuttings, may be added to or substituted for the middlings tailings. Preferably a screw-type heat exchanger and blender is used to reduce the moisture content and the content of low boiling fractions of the PCA's and PCB's in the sludge mixture. The froth treatment tailings may be added to the mixture after blending and drying in the heat exchanger and the blender. Where the moisture of the sludge or tailings is initially too great, for example, higher than 40%, an additional upstream filtration step may be required prior to mixture with the secondary fuel.

The sludge utilization and disposal method may be usefully combined with a flooded mine method of tar sands mining.

According to this aspect of the invention, the tar sands excavation is allowed to flood, and mining of the tar sands is carried out using floating dredgers. The mined tar sands are conveyed to an extraction plant which, in using the hot water extraction process utilizes the tailings produced in such process as a fuel or feedstock according to this invention. The extraction plant may also be floating. The hot, clean ash or sand resulting from the process is returned to the dredging pond in the previous mined area. Consequently, a continuous, year-round tar sands mining process may be carried out without the necessity of tailings ponds.

Detailed Description of some Embodiments of the Invention

I.  The secondary or middlings tailings are first collected in a primary sludge bin. The middlings tailings may have been subjected to an upstream drying or dewatering process in a belt filter or bath filter. In some cases, such as in the Gulf RTR hot water process, the upstream filtration step is not required as the middlings tailings are sufficiently dry, consisting of roughly 30% water by weight. However in the older Clark hot water process, some upstream dewatering is required. Primary tailings, consisting largely of sand, may also be added to the primary sludge bin. Where a belt filter is utilized for the upstream dewatering step, a subsequent compression section may be used in conjunction with the belt filter. Ash from the combustion or from other sources may be added to the filter's slurry preparation to enhance the filtration. An alternative method of dewatering the sludge is through use of a variable volume filter.

The sludge is then conveyed to a heat exchanger/blender where it is mixed with secondary fuel. This secondary fuel may consist of fluid coke, a byproduct of the fluid coking process, or delayed coke, a by-product of the delayed coking process, or coal or other carbonaceous fuels, which has been or have been ground in a mill.

The secondary fuel is conveyed to the heat exchanger/blender using an air slide, such as the DYNA-SLIDE$^{TM}$ air slide. In the preferred form of the invention, the heat exchanger/blender is a screw-type indirect heat exchanger/blender such as HOLO-FLITE$^{TM}$ processor. Such a processor utilizes hollow screw flights which contain passages for heat exchanging fluid such as oil.

The hot oil is circulated through the screw flights which act to both blend and heat the sludge mixture. The oil is circulated to a heater, and also may be circulated through an ash cooler to pick up heat from the fluidized bed combustor as further described below. The heat exchanger/blender serves to dry the sludge and mix it with the secondary fuel. The dried mixture is conveyed to a secondary mixer where the froth treatment tailings are added to the dried mixture. Because of the naptha content of the froth tailings, it is not desirable to initially heat the froth tailings as this would result in loss of the naptha diluent through evaporation. Limestone and/or other additives may be added at this stage. Limestone will ultimately react with the sulphur generated by the combusting of the coke to reduce sulphur emissions in the combusting process. Additional coke or secondary fuel may also be added in the secondary mixer stage. The secondary mixer may consist of a screw-type conveyor. The mixture is conveyed to a surge bin. The bin allows a controlled amount of the fuel to enter the fluidized bed combustor to provide a continuous process.

Sludge which has been extracted from the so-called sludge zone in existing tailings ponds may also be combusted in the process. Such sludges would be added to the primary sludge bin. The slurries of water, sand, clay and bitumen produced as 'produced water' in in situ heavy oil production may also be combusted according to the present invention.

The relative amounts of middlings tailings and secondary fuels added in the primary heat exchanger/blender would be determined by the optimum consistency of the slurry for heat transfer to the sludge mixture. It is necessary for the process, however, that sufficient dewatering or drying of the mixture which enters the surge bin has taken place to allow for such mixture to maintain self-sustaining combustion in the fluidized bed furnace. The limits for attaining a self-sustaining combustion are determined as a function of the moisture content of the sludge mixture, the solids content and the carbon content. A suitable mixture would have from 18% to 25% water and at least 16% carbon.

Based on the available coke from the upgrading process, it has been found that sludges containing 30% to 40% water by weight are suitable for entering the primary sludge bin step of the process. Processed sludges from the middlings stream of the Gulf RTR extraction process generally contain on the order of 8% bitumen and 40% or less water, the balance being solids. Where sludges are dredged from existing tailings ponds, the water content is generally higher, on the order of 56%, with a bitumen content of 2% to 7% and the remainder solids. An additional filtration step is therefore required to reduce the water content of the tailings pond sludges to roughly 35% to 40%. To enhance the filtration process, ashes from the combustion or gasification or from other sources are added to the slurry preparation mixer. The secondary carbon fuels are added to the primary or secondary mixers as appropriate to increase the carbon content of the mixture, while maintaining a suitable slurry for heat exchange in the screw conveyor/ heat exchanger.

From the surge bin, the mixture is conveyed to the fluidized bed combustor by screw-type conveyor. Either a standing bed or circulating bed fluidized bedcombustor, as manufactured by Babcock-BSH Aktiengesellschaft, Struthers Wells Corporation or Pyropower Corporation is suitable. The dried mixture is introduced into the fluidized bed combustor. Combustion air is provided by a fresh air fan. On start-up, the fresh air is preheated to obtain the required inlet temperature for preheating the inert fluidizing bed to a temperature high enough for ignition and combustion of the incoming sludge. Once combustion conditions have stabilized, the pre-heater is not required. Heat is transferred from the fluidized bed combustor to a boiler for the production of steam for use in the hot water extraction process or elsewhere. The ash is collected from the furnace and boiler. An ash cooler may be utilized to transfer heat from the ash to the oil used in the heat exchanger/blender. The ash is then conveyed to the mined-out area.

A certain minimum content of particulate solids is required for proper combustion in the fluidized bed. To obtain additional solids, the percentage content of primary tailings in the sludge mixture may be increased. Ash retrieved from the furnace or boiler may be recycled into the fluidized bed.

As an alternative to use of the fluidized bed combustor, the sludge may be pelletized. The mixture in the surge bin is conveyed to a pelletizer. Existing pelletizers such as the disk pelletizer manufatured by various manufacturers are suitable. A mixture in the surge bin having as a maximum approximately 15% moisture content is suitable for the pelletizer. Appropriate binders are added to the pelletizer. The pellets may then be using hot air, hot gas or infra-red radiation or other means and are conveyed to a pellet silo for storage. The pellets may be used as a feedstock in a LURGI$^{TM}$ fixed bed gasifier or other gasifier to provide synthetic gas as a feedstock for hydrogen production or as fuel for a gas-fired boiler. A second alternative is to combust and sinter the pellets in a sinter process. The pellets may be crushed into smaller sizes before they are combusted or gasified.

The combustion of the sludge in the fluidized bed is particularly suitable when used in association with a flooded mine method of tar sands mining. In this method, enough of the overburden and tar sands is excavated to allow flooding of the excavation by groundwater to a depth of approximately 3 meters or more. A floating dredger may then be utilized to continue the mining of the tar sands from the dredging pond. The extraction plant may also be located on a floating platform, als though a mobile, land-based extraction plant is also suitable. As land-based earth moving equipment removes the overburden, the dredger removes the unmined tar sand from the dredging pond. The tar sand are conveyed by slurry pipeline to the extraction plan, where the hot water extraction process is carried out. The extracted bitumen from the extraction plant is piped to the upgrading plant, while the tailings are combusted according to the present invention. The primary tailings and hot ash are returned to the mined-over section of the dredging pond. Alternativeley the ash may be used to manufacture gravel, concrete mortar or masonry mortar. The heat carried by the primary tailings or ash raises the temperature of the dredging pond so that the dredging pond remains unfrozen throughout the year, even in the Alberta climate.

By returning the excavated overburden to the previously mined areas, a continuous mining process is achieved without the production of tailings ponds which would require reclamation.

II. The sludge dredged from harbours are first collected in a primary sludge bin. The sludges may have been subjected to an upstream drying or dewatering process in a belt filter or mechanical press. The filtrate water has to be treated depending on the composition and toxicity, before disposal. Where a belt filter is utilized for the upstream dewatering step, a subsequent compression section may be used in conjunction with the belt filter. To enhance the filtration process polyelectrolytes or other flocculants and fly ash or ground ash may be added. The sludge is then conveyed to a heat exchanger/blender where it is mixed with secondary fuel.

The heat exchanger/blender serves to dry the sludge and mix it with secondary fuel.

The dried mixture is conveyed to a secondary dryer to dry the mixture further. The secondary dryer is of the direct contact type and may use hot air, hot gas, steam, or hot ash from the combustor or gasifier.

Limestone and other additives may also be added. Limestone will ultimately react with the sulphur generated by the combustion to reduce sulphur emissions.

The dried mixture is then conveyed to a reactor. The reactor consists of the double shaft type or a rotary drum, where the mixture is contacted with hot fluid bed material recirculated form the fluidized bed boiler. The temperature of the mixture is raised to $300^{O}$ C to $550^{O}$ C to distillate or crack the high boiling PCA's, PCB's and HCB's. Part of the oil in the sludge is also cracked with the remainder left as a coke in the mixture. The hot mixture is conveyed to a surge bin. The bin allows a controlled amount of fuel to enter the fluidized bed combustor to provide a continuous process.

The relative amounts of harbour sludge and secondary fuels added in the primary heat exchanger/blender would be determined by the optimum consistency of the slurry for heat transfer to the sludge mixture.

The distillates and crack gases are burned at 1100°C and higher in an afterburner and the hot gases are mixed with the combustion gases, from the fluidized bed combustor. The total combustion gases will be cooled in a boiler and/or heat exchanger.

From the surge bin, the mixture is conveyed to the fluidized bed combustor. Heat is transferred from the combustor to a boiler for the production of steam for use elsewhere.

Ash retrieved from the furnace or boiler may be recycled into the fluidized bed.

As an alternative to use of the mixture as a loose blend, the sludge may be pelletized and the pellets may be used as described in the first embodiment.

The hot coarse ashes from the fluidized bed may be further sintered at temperatures above 1100°C to increase the strenght of the ash matrix; or the hot fine ashes may be blended with limestone, calcinated and/or sintered at 1450°C, cooled and granulated to produce granulates which may be used as a feedstock for cement production; or the ashes may be solidified with 5 wt% CaO and 5-10 wt% gypsum.

Depending on the heavy metal, the silica and carbon content the coarse and fine ashes may be used to produce cement, lightweight aggregates or wallblocks for the building industry.

While preferred embodiments of the present invention have been described, the invention should not be limited thereto but may be otherwise embodied within the scope of the following claims.

The embodiments of the invention in which an exclusive property or privilege is claimed are defined as follows:

1. A method of processing highly contaminated and/or toxic and/or bitumen and/or oil containing sludge or tailings characterized by:
   (a) Mixing said sludge or tailings with a secondary carbonaceous fuel;
   (b) Reducing the moisture content and toxic content of said mixture to a range where in said mixture is capable of maintaining self-sustaining combustion in a combustor or a gasifier.
   (c) Combusting or gasifying said mixture in a combustor or gasifier.

2. The method of Claim 1 wherein the bitumen and/or oil containing sludges or tailings comprises the sludges from harbour maintenance dredging operation, or the middlings or primary tailings from a tar sands hot water extraction process, or sludge from the sludge zone of a tailir pond produced in the tar sands hot water extraction process, or sludge from the produced water *in situ* heavy oil and bitumen production or oil well drill cutting sludges.

3. The method of Claim 2 wherein said secondary, carbonaceous fuel comprises coal or coke.

4. The method of Claim 3 wherein said mixing, and drying and detoxification steps are carried out in a screw-type heat exchanger/blender.

5. The method of Claim 4 wherein the heating medium of the heat exchanger and blender is circulated to convey heat from the bottom ash cooler of the combustor or gasifier.

6. The method of Claim 3 wherein said combustion or gasification step is carried out in a standing or circulating bed fluidizec bed combustor.

7. The method of Claim 6 wherein ash retrieved from the combustic cycle is introduced into the fluidized bed of said fluidized bed combustion furnace.

8. The method of Claim 2 comprising the further step of reducing the moisture content of said sludge or tailings prior to mixing with said secondary fuel.

9. The method of Claim 8 wherein the moisture content of said sludge or tailings is reduced to approximately 40% or less by weight prior to mixing with said secondary fuel.

10. The method of claim 8 wherein said moisture content is reduced in a belt filter.

11. The method of Claim 10 wherein said belt filter also comprises a subsequent compression section.

12. The method of Claim 8 wherein said moisture content is reduced using a variable volume filter.

13. A method of mining tar sands comprising:

(a) Forming an excavation in or over the tar sands formation;

(b) Allowing said excavation to flood to form a dredging pond;

(c) Utilizing a floating dredger to mine the tar sands;

(d) Conveying the mined tar sands to an extraction plant;

(e) Extracting bitumen from the tar sands utilizing a hot water extraction process;

(f) Applying the method of Claim 1,4 or 5 to treat the sludge or tailings produced in said process; and

(g) Returning the ash or sand produced in said combustion process to the previously mined section of said dredging pond.

14. A method of mining tar sands comprising;

(a) Forming an excavation in or over the tar sands formation;

(b) Allowing said excavation to flood to form a dredging pond;

(c) Utilizing a floating dredger to mine the tar sands;

(d) Conveying the mined tar sands to a floating or mobile extraction plant;

(e) Extracting bitumen from the tar sands utilizing a hot water extraction process;

(f) Applying the method of Claim 1, 4 or 5 to treat the sludge or tailings produced in said process; and

(g) Returning the ash or sand produced in said combustion process to the previously mined section of said dredging pond.

15. The method of Claim 2 comprising the further step of reducing the high boiling toxic hydrocarbon fractions in said mixture before combusting or gasifying said mixture.

16. The method of Claim 15 wherein the high boiling toxic hydrocarbon content is reduced by distillation and or cracking said mixture in a reactor.

17. The method of Claim 16 wherein said distillation and/or cracking are carried out in a double shaft screw reactor or a rotary drum reactor.

18. The method of Claim 17 wherein the heat-carrier of the heat for distillation and/or cracking is hot fluidized bed material circulated from the fluidized bed combustor or gasifier.

19. The method of Claim 2 or Claim 15 comprising the further steps of:

    (a) pelletizing the said mixture after sufficient dewatering;

    (b) curing the pellets with hot air, hot gases or other means to provide for enough strenght of the pellets and the required moisture content;

    prior to combusting or gasifying said pellets in a combustor or gasifier.

20. The method of Claim 19 wherein the moisture content of said mixture before pelletizing is approximately 30% or less by weight.

21. The method of Claim 19 wherein the gasification of said pellets is carried out in a LURGI$^{TM}$ fixed bed gasifier.

22. The method of Claim 19 wherein the combustion of said pellets is carried out in a combustion/sinteroven with ignition hood to ignite the pellets, using the oil and/ or coal in the pellets to sustain combustion.

23. The method of claim 19 wherein the combustion of said pellets is carried out in the fluidized bed combustor.

24. The method of Claim 10, wherein ash from the combustor or gasifier or other sources is added to the sludge slurry to enhance the filtration process.

25. The method of Claim 10 or Claim 24 wherein flocculants or other chemicals are used to enhance the filtration process.